# EUROPEAN PATENT APPLICATION

(11) **EP 4 790 872 A1**
(43) Date of publication of application: **12.08.2026**
(21) Application number: 25171131.3
(22) Date of filing: 17.04.2025
(51) Int. Cl.: H02J 50/12, H02J 50/60

(54) **INDUCTIVE POWER SUPPLY AND OBJECT DETECTION METHOD THEREOF**

(30) Priority: 05.02.2025 CN 202510128661
(71) Applicant: Delta Electronics, Inc., Taoyuan City 33370 (TW)
(72) Inventor: Chan, Chi-Che, 32063 Taoyuan City (TW)
(74) Representative: Uexküll & Stolberg

(57) **Abstract**

The present disclosure provides an inductive power supply (1, 1a, 1b) and an object detection method thereof. A resonant signal is generated when the resonant capacitor (30, 30a) resonates with the power supply coil (20). A voltage detector (32) receives the resonant signal and converts it into a detection signal. A processor (4) obtains a resonant cycle of the resonant signal according to the detection signal. After the driving unit (31, 31a) drives the power supply coil (20), the resonant capacitor (30, 30a) resonates with the power supply coil (20), and a timer of the processor (4) starts timing. When the resonant cycle exceeds a cycle threshold, the timer stops timing. The processor (4) calculates and obtains a measurement of time length according to an interval between the start time and the stop time of the timer. When the measurement of time length is less than a preset time length, the processor (4) determines that there is an object within the power transmission range of the power supply module (2).

## Description

### FIELD OF THE INVENTION

The present disclosure relates to an inductive power supply and an object detection method thereof, and more particularly to an inductive power supply and an object detection method thereof for improving detection accuracy.

### BACKGROUND OF THE INVENTION

In an inductive power supply (such as a wireless charging device that transmits energy through coil induction), foreign object detection (FOD) is a critical safety mechanism for detecting whether there is a metallic foreign object around the power supply module of the inductive power supply. If there is a metallic foreign object around the power supply module when the power supply coil is activated but doesn't start to transmit power to the receiving module, the temperature of the metallic foreign object may rise rapidly and cause danger.

In conventional inductive power supplies, whether there is a metallic foreign object around the power supply coil is determined by analyzing the resonant signal generated by the power supply coil and the capacitor of the power supply module. This detection approach directly relies on the attenuation voltage of the resonant signal. However, in low-signal regions, the resonant signal is easily affected by noise, thereby reducing detection accuracy. In addition, since the resonant signal generated by the power supply coil and the capacitor has single frequency characteristic, it can only respond to a specific type of metallic foreign object. That is, the mentioned approach can only detect one specific type of metallic foreign object. Therefore, the applicability is limited.

Therefore, there is a need of providing an inductive power supply and an object detection method thereof to obviate the drawbacks encountered from the prior arts.

### SUMMARY OF THE INVENTION

It is an object of the present disclosure to provide an inductive power supply and an object detection method thereof. In the present disclosure, the resonant cycle of the resonant signal and the total time length of the resonant cycle within a specific range are utilized to determine whether there is an object within the power transmission range of the power supply module. This object detection approach is resistant to noise effect, thereby improving detection accuracy.

In accordance with an aspect of the present disclosure, there is provided an inductive power supply. The inductive power supply includes a power supply module, a resonant capacitor, a driving unit, a voltage detector and a processor. The power supply module includes a power supply coil. The resonant capacitor is electrically connected to a first terminal of the power supply coil. There is a node between the first terminal of the power supply coil and the resonant capacitor, and the power supply coil and the resonant capacitor form a resonant circuit. A resonant signal is generated when the resonant capacitor resonates with the power supply coil. The driving unit is electrically connected to the resonant capacitor, and the driving unit outputs a driving signal for driving the power supply coil. The voltage detector receives the resonant signal and converts the resonant signal into a detection signal. The processor is electrically connected to the voltage detector and the driving unit. The processor controls the driving unit and obtains a resonant cycle of the resonant signal according to the detection signal when the resonant capacitor resonates with the power supply coil. After the driving unit drives the power supply coil, the resonant capacitor resonates with the power supply coil, and a timer of the processor starts timing. When the resonant cycle exceeds a cycle threshold, the timer stops timing. The processor calculates and obtains a measurement of time length according to an interval between the start time and the stop time of the timer. When the measurement of time length is less than a preset time length, the processor determines that there is an object within the power transmission range of the power supply module.

In accordance with an aspect of the present disclosure, there is provided an object detection method of an inductive power supply. The objective detection method includes steps of: (a) when the driving unit drives the power supply coil, utilizing the resonant capacitor to resonant with the power supply coil to generate the resonant signal, and controlling the timer of the processor starts timing; (b) utilizing the voltage detector to receive the resonant signal and converting the resonant signal into the detection signal; (c) when the resonant cycle exceeds the cycle threshold, controlling the timer to stop timing; (d) utilizing the processor to calculate and to obtain the measurement of time length according to an interval between the start time and the stop time of the timer; and (e) utilizing the processor to determine that there is an object within the power transmission range of the power supply module when the measurement of time length is less than the preset time length.

The above contents of the present invention will become more readily apparent to those ordinarily skilled in the art after reviewing the following detailed description and accompanying drawings, in which:

### BRIEF DESCRIPTION OF THE DRAWINGS

FIG. 1 is a schematic circuit diagram illustrating an inductive power supply according to an embodiment of the present disclosure;
FIG. 2 schematically shows the waveforms of the driving signal of the driving unit, the resonant signal of the power supply coil and the detection signal of the voltage detector of FIG. 1;
FIG. 3 is an enlarged view of frame A in FIG. 2;
FIG. 4 is a schematic diagram of the driving signal of the driving unit, the resonant signal of the power supply coil and the detection signal of the voltage detector when the variation value is greater than the preset variation value;
FIG. 5 is a schematic circuit diagram illustrating an inductive power supply according to another embodiment of the present disclosure;
FIG. 6 is a schematic circuit diagram illustrating an inductive power supply according to another embodiment of the present disclosure;
FIG. 7 is a schematic flow chart illustrating an object detection method of an inductive power supply according to an embodiment of the present disclosure;
FIGs. 8 and 9 are schematic flow charts illustrating an object detection method of an inductive power supply according to another embodiment of the present disclosure; and
FIGs. 10 and 11 are schematic flow charts illustrating an object detection method of an inductive power supply according to another embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

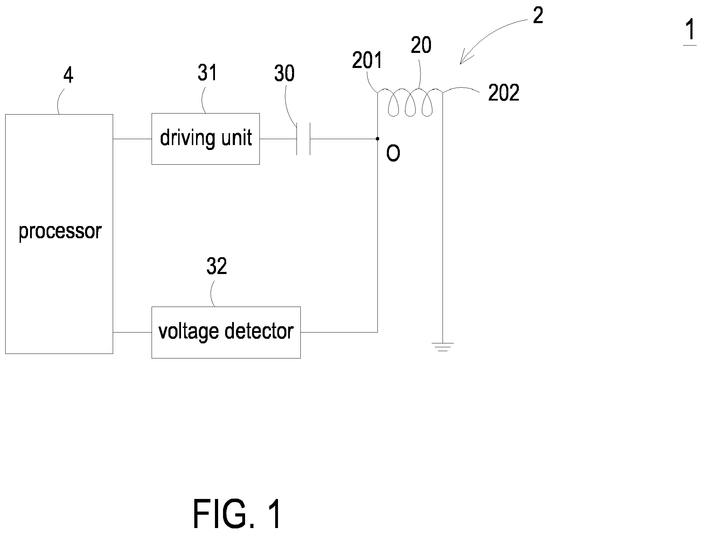

FIG. 1 is a schematic circuit diagram illustrating an inductive power supply 1 according to an embodiment of the present disclosure. As shown in FIG. 1, the inductive power supply 1 includes a power supply module 2, a resonant capacitor 30, a driving unit 31, a voltage detector 32 and a processor 4. The power supply module 2 includes a power supply coil 20, the resonant capacitor 30 is electrically connected to a first terminal 201 of the power supply coil 20. There is a node O between the first terminal 201 of the power supply coil 20 and the resonant capacitor 30, and the power supply coil 20 and the resonant capacitor 30 form a resonant circuit. A resonant signal is generated when the resonant capacitor 30 resonates with the power supply coil 20.

The driving unit 31 is electrically connected to the resonant capacitor 30 and outputs a driving signal for driving the power supply coil 20. The resonant signal is generated when the resonant capacitor 30 resonates with the power supply coil 20. The voltage detector 32 is electrically connected to the node O for receiving the resonant signal, and the voltage detector 32 converts the resonant signal into a detection signal.

The processor 4 is electrically connected to the voltage detector 32 and the driving unit 31. The processor 4 controls the driving unit 31 and obtains a resonant cycle of the resonant signal according to the detection signal when the resonant capacitor 30 resonates with the power supply coil 20. The processor 4 is for example but not limited to a MCU (micro control unit). In an embodiment, the processor 4 controls the driving unit 31 through software.

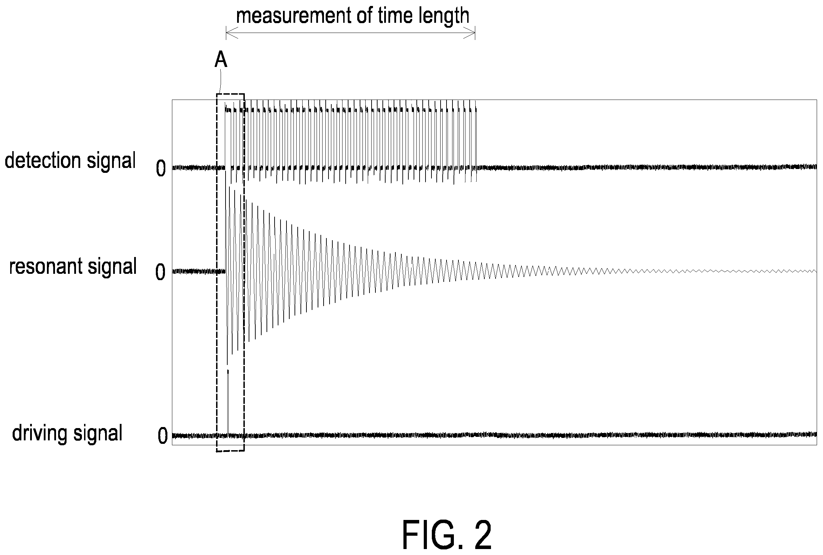

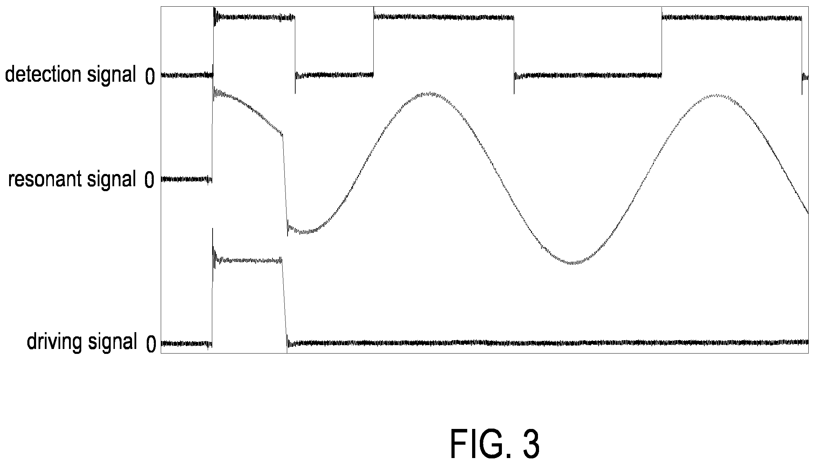

Please refer to FIGs. 1, 2 and 3. FIG. 2 schematically shows the waveforms of the driving signal of the driving unit 31, the resonant signal of the power supply coil 20 and the detection signal of the voltage detector 32 of FIG. 1. FIG. 3 is an enlarged view of frame A in FIG. 2. After the driving unit 31 outputs a high-level driving signal (i.e., the driving unit 31 drives the power supply coil 20), the resonant capacitor 30 resonates with the power supply coil 20, and the resonant signal is generated. Meanwhile, the voltage detector 32 receives the resonant signal and converts the resonant signal into the detection signal. In the present disclosure, the resonant signal generated by the power supply coil 20 is corresponding to the detection signal converted by the voltage detector 32. The resonant signal and the detection signal are sine wave and digital signal respectively, and the digital signal is for example but not limited to a square wave. When the resonant signal (sine wave) is greater than zero, the voltage detector 32 converts the resonant signal into a high-level detection signal (square wave). Conversely, when the resonant signal (sine wave) is less than zero, the voltage detector 32 converts the resonant signal into a zero-level detection signal (square wave). In addition, since the resonant signal and the detection signal correspond to each other and share the same cycle, the processor 4 may determine the resonant cycle of the resonant signal according to the cycle of the detection signal. The cycle of the detection signal is defined as the time difference between the rising edges of two consecutive square waves.

After the driving unit 31 drives the power supply coil 20, the resonant capacitor 30 resonates with the power supply coil 20, and a timer of the processor 4 starts timing. The timer of the processor 4 starts timing at the rising edge of the first square wave of the detection signal. In an embodiment, the timer of the processor 4 is not limited to start timing at the rising edge of the first square wave of the detection signal, the timer may start timing at the rising edge of the second square wave or the third square wave of the detection signal.

When the resonant cycle of the resonant signal exceeds a cycle threshold, the timer stops timing. The processor 4 calculates and obtains a measurement of time length according to an interval between the start time and the stop time of the timer. In the present disclosure, the measurement of time length represents the decay rate of the resonant signal. If there is an object placed within the power transmission range of the power supply module 2, the decay rate of the resonant signal is accelerated due to the additional resistance generated by the object. Therefore, the decay rate of the resonant signal with an object placed within the power transmission range is faster than that of the resonant signal without an object placed within the power transmission range. In an embodiment, the processor 4 calculates the cycle threshold according to the average of multiple cycles of the detection signal in normal state, i.e., no object affecting the power transmission placed within the power transmission range of the power supply module 2, and the multiple cycles can be selected from 1st to Nth cycles of the detection signal, where N is greater than 1 and less than or equal to 3. The cycle of the detection signal is defined as the time between the rising edges of two adjacent square waves.

Therefore, when the measurement of time length is less than a preset time length, the processor 4 determines that there is an object within the power transmission range of the power supply module 2. Conversely, when the measurement of time length is greater than the preset time length, the processor 4 determines that there is no object within the power transmission range of the power supply module 2. In an embodiment, the object may be a power receiving device or a metallic foreign object. The power receiving device is disposed within the power transmission range of the power supply module 2 of the inductive power supply 1 correspondingly for receiving the power provided by the power supply coil 20 of the power supply module 2. The metallic foreign object is a metal that cannot receive power.

In the present disclosure, the resonant cycle of the resonant signal and the total time length of the resonant cycle within a specific range are utilized to determine whether there is an object within the power transmission range of the power supply module. This object detection approach is resistant to noise effect, thereby improving detection accuracy.

When the measurement of time length obtained by the processor 4 is less than the preset time length, the inductive power supply 1 of the present disclosure may utilize the resonant signal to further determine whether the object within the power transmission range of the power supply module 2 is a power receiving device or a metallic foreign object. In specific, the processor 4 records a maximum cycle value and a minimum cycle value of the resonant signal during the timing of the timer, and obtains a variation value according to the maximum cycle value and the minimum cycle value. In the present disclosure, the maximum cycle value is the maximum value of the resonant cycle, and the minimum cycle value is the minimum value of the resonant cycle. In addition, since the resonant signal and the detection signal correspond to each other and share the same cycle, the maximum cycle value and the minimum cycle value of the resonant cycle of the resonant signal are obtained through the cycle of the detection signal, and the variation value representing the variation amplitude of the resonant cycle is obtained accordingly. The variation amplitude of the resonant signal with a power receiving device placed within the power transmission range of the power supply module 2 is greater than that with a metallic foreign object placed within the power transmission range of the power supply module 2. The reason is explained as follows.

The receiving coil of the power receiving device is electrically connected to a rectifier and a filter capacitor. When the filter capacitor has not yet stored electricity, the electrical power of the filter capacitor is absorbed rapidly. At this time, since the input signal of the rectifier is less than the required specifications, the rectifier is not operated and its state is open. The rectifier is operated only when the input signal of the rectifier is greater than the required specifications. Therefore, the circuit characteristics of the power receiving device (the variation of the rectifier operation state) affect the resonant signal, causing significant variation of the resonant cycle of the resonant signal. On the other hand, if the object within the power transmission range of the power supply module 2 is a metallic foreign object, the metallic foreign object absorbs the electrical energy constantly, causing the resonant signal to decay rapidly. The variation of the resonant signal is linear due to the continuous energy absorption characteristic of the metallic foreign object, resulting in relatively small variation of the resonant cycle.

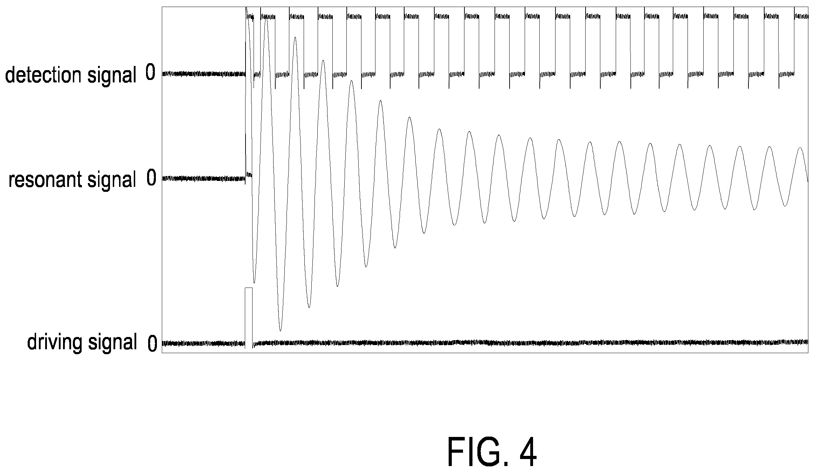

Therefore, when the measurement of time length is less than the preset time length and the variation value is greater than a preset variation value, the processor 4 determines that the object within the power transmission range of the power supply module 2 is a power receiving device. Conversely, when the measurement of time length is less than the preset time length and the variation value is less than the preset variation value, the processor 4 determines that the object within the power transmission range of the power supply module 2 is a metallic foreign object. Please refer to FIG. 4. FIG. 4 is a schematic diagram of the driving signal of the driving unit 31, the resonant signal of the power supply coil 20 and the detection signal of the voltage detector 32 when the variation value is greater than the preset variation value. As shown in FIG. 4, the variation value obtained according to the maximum cycle value and the minimum cycle value is greater than the preset variation value. Therefore, the processor 4 determines that the object within the power transmission range of the power supply module 2 is a power receiving device.

Please refer to FIG. 1 again. A resonant frequency is generated when the resonant capacitor 30 resonates with the power supply coil 20, and the capacitance of the resonant capacitor 30 affects the resonant frequency. In other words, the resonant frequency is determined by the capacitance of the resonant capacitor 30. In an embodiment, the resonant frequency is determined by the resonance of the resonant capacitor 30 and the power supply coil 20. If the same power supply coil 20 is adopted, the resonant frequency is determined by the resonant capacitor 30. In addition, the resonant frequency corresponds to the preset time length and the preset variation value. Therefore, when the resonant capacitor 30 has different capacitances, the resonant frequencies are different, and different resonant frequencies correspond to different preset time lengths and preset variation values. It can be seen from this that the capacitance of the resonant capacitor 30 can determine the resonant frequency and its corresponding preset time length and preset variation value. Therefore, by utilizing the preset time length and the preset variation value determined by the capacitance of the resonant capacitor 30, the processor 4 determines whether there is an object within the power transmission range of the power supply module 2 through the relationship between the measurement of time length and the preset time length during the resonance process, and determines whether the object within the power transmission range of the power supply module 2 is a power receiving device or a metal foreign object through the relationship between the variation value and the preset variation value.

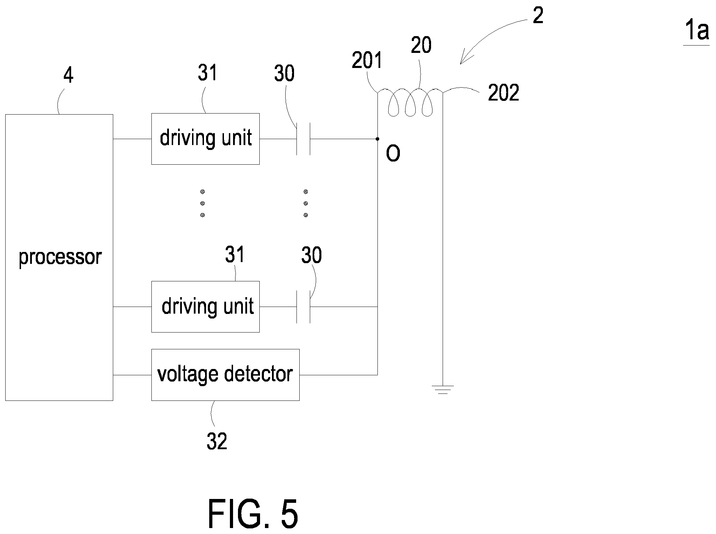

Please refer to FIG. 5. FIG. 5 is a schematic circuit diagram illustrating an inductive power supply 1a according to another embodiment of the present disclosure. The elements of the inductive power supply 1a of FIG. 5 that are similar with the elements of the inductive power supply 1 of FIG. 1 are represented by the same reference numerals, and the detailed description thereof is omitted herein. In this embodiment, the inductive power supply 1a includes a plurality of resonant capacitors 30 and a plurality of driving units 31. Each resonant capacitor 30 is electrically connected to the corresponding driving unit 31. Each resonant capacitor 30 and the corresponding driving unit 31 are electrically connected between the processor 4 and the first terminal 201 of the power supply coil 20, and each resonant capacitor 30 is electrically connected to the node O. The processor 4 controls at least one driving unit 31 for outputting the driving signal to the corresponding resonant capacitor 30, so the corresponding resonant capacitor 30 and the power supply coil 20 form a resonant circuit, and the resonant capacitor 30 resonates with the power supply coil 20 for generating the resonant signal. The resonant frequency is determined by the capacitance of the sum of the resonant capacitors 30 that resonate with the power supply coil 20. In an embodiment, the processor 4 controls the plurality of driving units 31 for outputting driving signals to the corresponding resonant capacitors 30 respectively, so the corresponding resonant capacitors 30 resonates with the power supply coil 20 for generating the resonant signal. Meanwhile, the resonant frequency is determined by the capacitance of the sum of the plurality of resonant capacitors 30 that resonate with the power supply coil 20. In the present disclosure, by controlling the number of the resonant capacitors 30 that resonate with the power supply coil 20, a variety of different resonant frequencies may be generated, and each resonant frequency corresponds to a specific preset cycle and a specific preset variation value.

In the embodiment with multiple resonant capacitors 30 and multiple driving units 31 mentioned above, by controlling the number of the resonant capacitors 30 that resonate with the power supply coil 20, different resonant frequencies may be generated to determine whether there are different types of metallic foreign objects within the power transmission range of the power supply module 2. Specifically, each type of the metallic foreign object has its own metal properties, and different metal properties correspond to different resonant frequencies. Therefore, different types of metallic foreign objects correspond to different resonant frequencies. Accordingly, a specific resonant frequency and its corresponding preset cycle and preset variation value may be utilized to detect a specific type of metallic foreign object.

In an embodiment, the plurality of resonant capacitors 30 may form a plurality of resonant capacitor combinations according to their resonant states, the resonant capacitor combination represents the resonant capacitor 30 that resonates with the power supply coil 20 among the plurality of resonant capacitors 30. Specifically, when the plurality of resonant capacitors 30 receive the driving signals of the corresponding driving units 31 respectively and resonate with the power supply coil 20, all the resonant capacitors 30 resonating with the power supply coil 20 form a resonant capacitor combination. Therefore, when different combinations of the resonant capacitors 30 among the plurality of resonant capacitors 30 resonate with the power supply coil 20, the different combinations of the resonant capacitors 30 form different resonant capacitor combinations.

In the present disclosure, the decay rate of the resonant signal is fast. In an embodiment, the measurement of time length is less than one thousandth of a second. Therefore, the time required to determine a specific type of metallic foreign object with a single resonant frequency is much shorter than the user's physical perception time (for example, the time it takes for the power receiving device to approach the power supply device 2, or the time it takes for the movement of the metallic foreign object placed on the power supply module 2), so there is no user experience of detection delay, and the detection can be performed with minimal power consumption. In addition, if multiple resonant frequencies are utilized for detection until all of the resonant frequencies are detected, since each detection time is much shorter than the user's physical perception time, the user does not experience any detection delay after all of the resonant frequencies are detected.

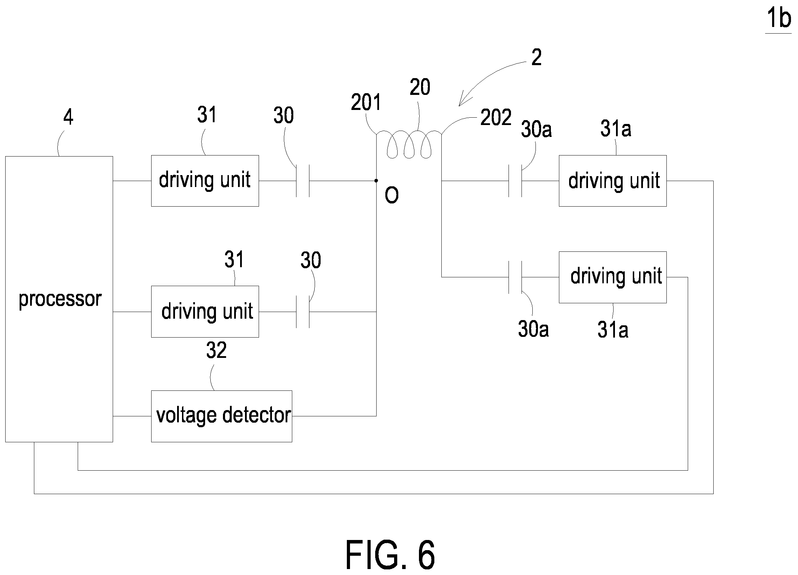

In the inductive power supply 1 of the present disclosure, the connection relationship of the second terminal 202 of the power supply coil 20 of the power supply module 2 is not limited. For example, the second terminal 202 of the power supply coil 20 of the power supply module 2 may be grounded or electrically connected to other resonant capacitors and driving units. The embodiment of that the second terminal 202 of the power supply coil 20 of the power supply module 2 is grounded is shown in FIGs. 1 and 5, and the embodiment of that the second terminal 202 of the power supply coil 20 of the power supply module 2 is electrically connected to other resonant capacitors and driving units is shown in FIG. 6.

Please refer to FIG. 6. FIG. 6 is a schematic circuit diagram illustrating an inductive power supply 1b according to another embodiment of the present disclosure. The elements of the inductive power supply 1b of FIG. 6 that are similar with the elements of the inductive power supply 1 of FIG. 1 are represented by the same reference numerals, and the detailed description thereof is omitted herein. In this embodiment, the inductive power supply 1b includes a plurality of resonant capacitors 30a and a plurality of driving units 31a. The resonant capacitor 30a is electrically connected to the corresponding driving unit 31a. The resonant capacitor 30a and the corresponding driving unit 31a are electrically connected between the second terminal 202 of the power supply coil 20 and the processor 4. The driving unit 31a is electrically connected to the processor 4, and the resonant capacitor 30a is electrically connected to the second terminal 202 of the power supply coil 20. The embodiment shown in FIG. 6 takes two resonant capacitors 30a and two driving units 31a as an example, but the actual number thereof is not limited thereto.

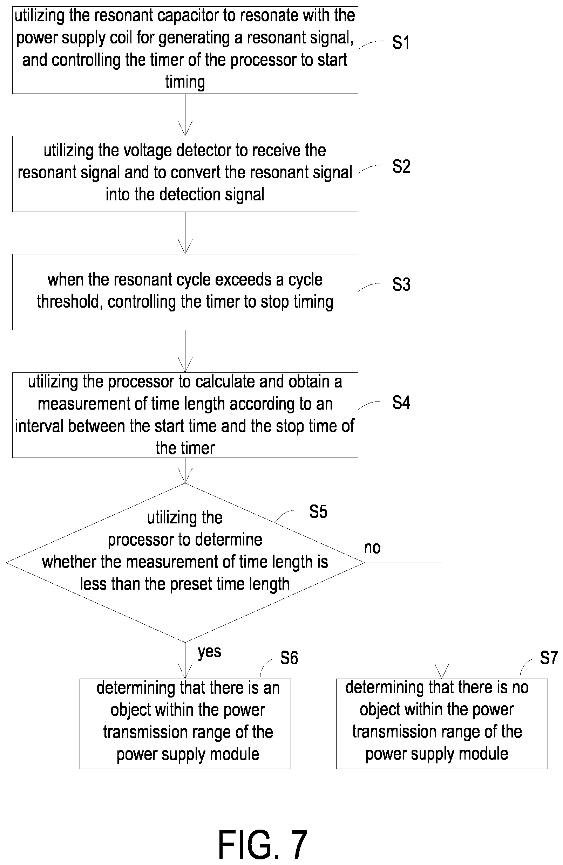

FIG. 7 is a schematic flow chart illustrating an object detection method of an inductive power supply according to an embodiment of the present disclosure. The object detection method of the present disclosure is applicable for the inductive power supply 1 stated above. Please refer to FIGs. 1 and 7. The object detection method of the present disclosure includes steps S1, S2, S3, S4, S5, S6 and S7. In the step S1, after the driving unit 31 drives the power supply coil 20, the resonant capacitor 30 is utilized to resonate with the power supply coil 20 for generating a resonant signal, and the timer of the processor 4 is controlled to start timing. In the step S2, the voltage detector 32 is utilized to receive the resonant signal and to convert the resonant signal into the detection signal. In the step S3, when the resonant cycle exceeds a cycle threshold, the timer is controlled to stop timing. In the step S4, the processor 4 is utilized to calculate and obtain a measurement of time length according to an interval between the start time and the stop time of the timer. In the step S5, the processor 4 is utilized to determine whether the measurement of time length is less than the preset time length, when the determination result of the step S5 is positive (i.e., the measurement of time length is less than the preset time length), the step S6 is performed. Conversely, when the determination result of the step S5 is negative (i.e., the measurement of time length is greater than the preset time length), the step S7 is performed. In the step S6, it is determined that there is an object within the power transmission range of the power supply module 2. In the step S7, it is determined that there is no object within the power transmission range of the power supply module 2.

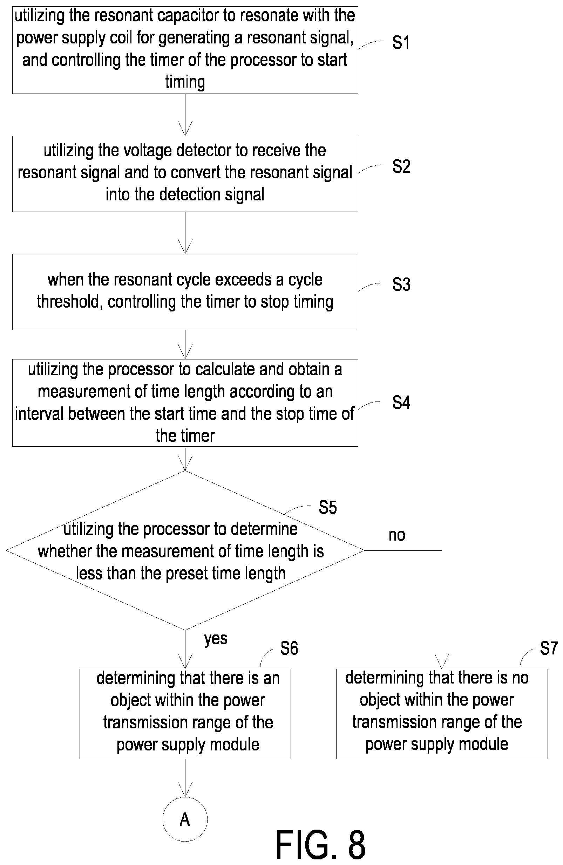

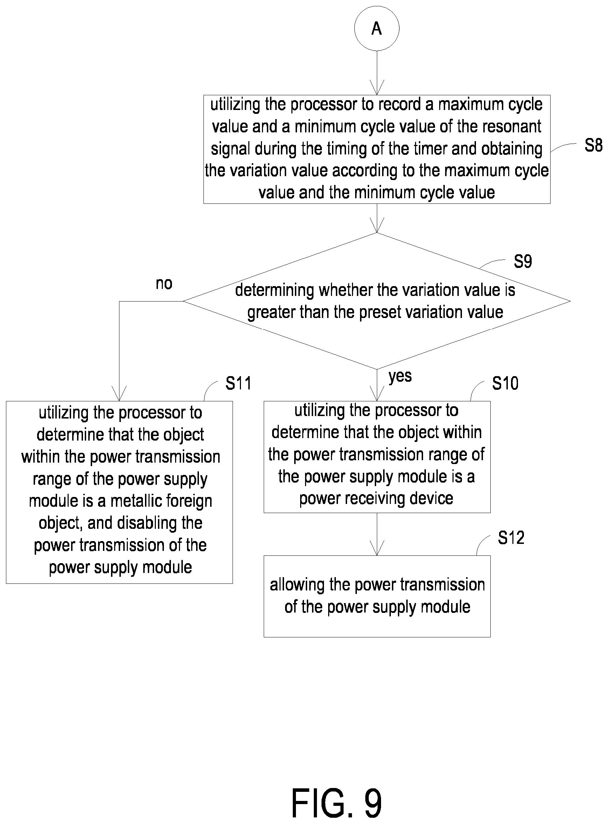

FIGs. 8 and 9 are schematic flow charts illustrating an object detection method of an inductive power supply 1 according to another embodiment of the present disclosure. The object detection method of the present disclosure is applicable for the inductive power supply 1 stated above. Please refer to FIGs. 1, 8 and 9. In this embodiment, the object detection method of the inductive power supply 1 further includes steps S8, S9, S10, S11 and S12 after the step S6 is performed. In the step S8, the processor 4 is utilized to record a maximum cycle value and a minimum cycle value of the resonant signal during the timing of the timer and to obtain the variation value according to the maximum cycle value and the minimum cycle value. In the step S9, it is determined whether the variation value is greater than the preset variation value, when the determination result of the step S9 is positive (i.e., the variation value is greater than the preset variation value), the step S10 is performed. Conversely, when the determination result of the step S9 is negative (i.e., the variation value is less than the preset variation value), the step S11 is performed. In the step S10, the processor 4 is utilized to determine that the object within the power transmission range of the power supply module 2 is a power receiving device, and the step S12 is performed after the step S10 is performed. In the step S11, the processor 4 is utilized to determine that the object within the power transmission range of the power supply module 2 is a metallic foreign object, and the power transmission of the power supply module 2 is disabled. In the step S12, the power transmission of the power supply module 2 is allowed.

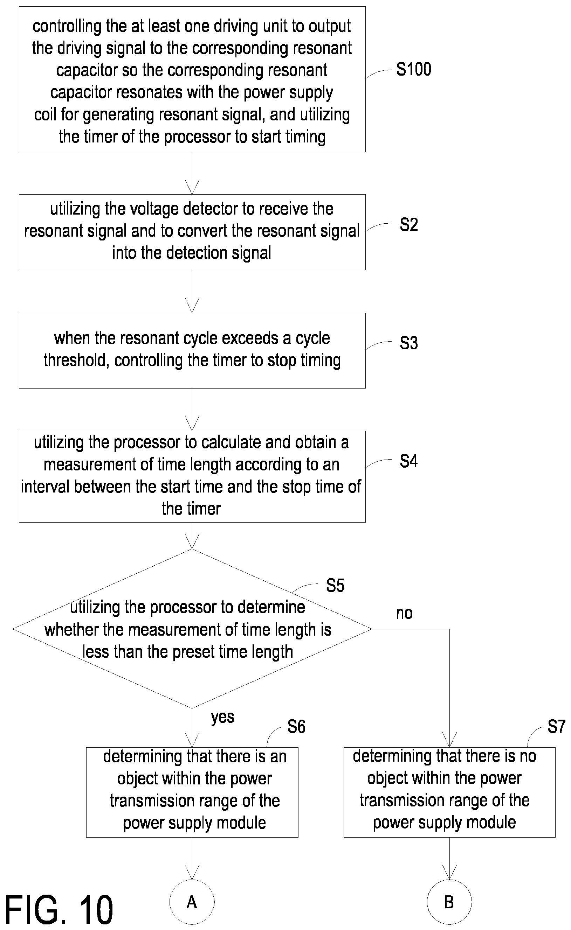

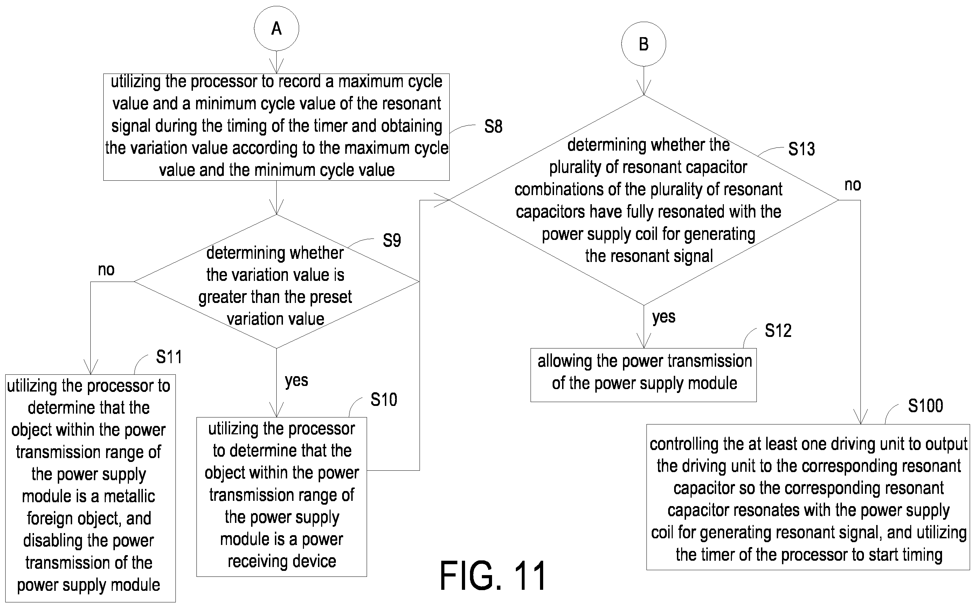

FIGs. 10 and 11 are schematic flow charts illustrating an object detection method of an inductive power supply 1a according to another embodiment of the present disclosure. The object detection method of the present disclosure is applicable for the inductive power supply 1a stated above. Please refer to FIGs. 1, 10 and 11. In this embodiment, the step S1 of the object detection method of the inductive power supply 1a further includes a step S100. In the step S100, the at least one driving unit 31 is controlled to output the driving unit to the corresponding resonant capacitor 30, so the corresponding resonant capacitor 30 resonates with the power supply coil 20 for generating resonant signal, and the timer of the processor 4 is utilized to start timing. In this embodiment, the step S13 is performed after the step S7 and the step S10 are performed. In the step S13, it is determined whether the plurality of resonant capacitor combinations of the plurality of resonant capacitors 30 have fully resonated with the power supply coil 20 for generating the resonant signal. When the determination result of the step S13 is positive (i.e., the plurality of resonant capacitor combinations of the plurality of resonant capacitors 30 have resonated with the power supply coil 20 for generating the resonant signal), the step S12 is performed. Conversely, when the determination result of the step S13 is negative (i.e., the plurality of resonant capacitor combinations of the plurality of resonant capacitors 30 have not fully resonated with the power supply coil 20 for generating the resonant signal), the step S100 is performed again, and in the step S100, a resonant capacitor combination that has not resonated with the power supply coil 20 among the plurality of resonant capacitor combinations is selected to resonate with the power supply coil 20.

From the above descriptions, the present disclosure provides an inductive power supply and an object detection method thereof. In the present disclosure, the resonant cycle of the resonant signal and the total time length of the resonant cycle within a specific range are utilized to determine whether there is an object within the power transmission range of the power supply module. This object detection approach is resistant to noise effect, thereby improving detection accuracy.

## Claims

1. An inductive power supply (1, 1a, 1b), **characterized by** comprising:
a power supply module (2), comprising a power supply coil (20);
a resonant capacitor (30, 30a), electrically connected to a first terminal (201) of the power supply coil (20), wherein there is a node (O) between the first terminal (201) of the power supply coil (20) and the resonant capacitor (30, 30a), and the power supply coil (20) and the resonant capacitor (30, 30a) form a resonant circuit, and a resonant signal is generated when the resonant capacitor (30, 30a) resonates with the power supply coil (20);
a driving unit (31, 31a), electrically connected to the resonant capacitor (30, 30a), wherein the driving unit (31, 31a) outputs a driving signal for driving the power supply coil (20);
a voltage detector (32), electrically connected to the node (O) for receiving the resonant signal and converting the resonant signal into a detection signal; and
a processor (4), electrically connected to the voltage detector (32) and the driving unit (31, 31a), wherein the processor (4) controls the driving unit (31, 31a) and obtains a resonant cycle of the resonant signal according to the detection signal when the resonant capacitor (30, 30a) resonates with the power supply coil (20),
wherein after the driving unit (31, 31a) drives the power supply coil (20), the resonant capacitor (30, 30a) resonates with the power supply coil (20), and a timer of the processor (4) starts timing, wherein when the resonant cycle exceeds a cycle threshold, the timer stops timing, the processor (4) calculates and obtains a measurement of time length according to an interval between the start time and the stop time of the timer,
wherein when the measurement of time length is less than a preset time length, the processor (4) determines that there is an object within a power transmission range of the power supply module (2).

2. The inductive power supply (1, 1a, 1b) according to claim 1, wherein when the measurement of time length is greater than the preset time length, the processor (4) determines that there is no object within the power transmission range of the power supply module (2).

3. The inductive power supply (1, 1a, 1b) according to claim 1, wherein a resonant frequency is generated when the resonant capacitor (30, 30a) resonates with the power supply coil (20), and the resonant frequency corresponds to the preset time length.

4. The inductive power supply (1, 1a, 1b) according to claim 3, wherein the processor (4) records a maximum cycle value and a minimum cycle value of the resonant signal during timing of the timer, and obtains a variation value according to the maximum cycle value and the minimum cycle value, when the measurement of time length is less than the preset time length and the variation value is greater than a preset variation value, the processor (4) determines that the object within the power transmission range of the power supply module (2) is a power receiving device configured to receive the power provided by the power supply module (2), when the measurement of time length is less than the preset time length and the variation value is less than the preset variation value, the processor (4) determines that the object within the power transmission range of the power supply module (2) is a metallic foreign object.

5. The inductive power supply (1, 1a, 1b) according to claim 4, wherein the resonant frequency corresponds to the preset variation value, and a capacitance of the resonant capacitor (30, 30a) affects the resonant frequency.

6. The inductive power supply (1, 1a, 1b) according to claim 1, further comprising a plurality of said resonant capacitors (30, 30a) and a plurality said driving units (31, 31a), wherein each resonant capacitor (30, 30a) is electrically connected to a corresponding said driving unit (31, 31a), each resonant capacitor (30, 30a) and the corresponding driving unit (31, 31a) are electrically connected between the processor (4) and the first terminal (201) of the power supply coil (20), each resonant capacitor (30, 30a) is electrically connected to the node (O), the processor (4) controls at least one of the driving unit (31, 31a) for outputting the driving signal to the corresponding resonant capacitor (30, 30a), so the corresponding resonant capacitor (30, 30a) resonates with the power supply coil (20) for generating the resonant signal.

7. The inductive power supply (1, 1a, 1b) according to claim 6, wherein a resonant frequency is generated when the corresponding resonant capacitor (30, 30a) resonates with the power supply coil (20), and the resonant frequency corresponds to the preset time length.

8. An object detection method of an inductive power supply (1, 1a, 1b), suitable for the inductive power supply (1, 1a, 1b) according to claim 1, **characterized in that** the detection method comprises steps of:
(a) after the driving unit (31, 31a) drives the power supply coil (20), utilizing the resonant capacitor (30, 30a) to resonate with the power supply coil (20) for generating the resonant signal, and controlling the timer of the processor (4) to start timing;
(b) utilizing the voltage detector (32) to receive the resonant signal and converting the resonant signal into the detection signal;
(c) when the resonant cycle exceeds the cycle threshold, controlling the timer to stop timing;
(d) utilizing the processor (4) to calculate and obtain the measurement of time length according to an interval between the start time and the stop time of the timer; and
(e) utilizing the processor (4) to determine that there is the object within the power transmission range of the power supply module (2) when the measurement of time length is less than the preset time length.

9. The object detection method according to claim 8, wherein a resonant frequency is generated when the resonant capacitor (30, 30a) resonates with the power supply coil (20), and the resonant frequency corresponds to the preset time length, and a capacitance of the resonant capacitor (30, 30a) affects the resonant frequency.

10. The object detection method according to claim 8, further comprising a step of:
(f) utilizing the processor (4) to determine that there is no object within the power transmission range of the power supply module (2) when the measurement of time length is greater than the preset time length.

11. The object detection method according to claim 10, wherein after the step (e), the object detection method further comprises steps of:
(g) utilizing the processor (4) to record a maximum cycle value and a minimum cycle value of the resonant signal during timing of the timer and to obtain a variation value according to the maximum cycle value and the minimum cycle value; and
(h) determining whether the variation value is greater than a preset variation value.

12. The object detection method according to claim 11, wherein the step (h) further comprises steps of:
(h1) when the determination result of the step (h) is positive, utilizing the processor (4) to determine that the object within the power transmission range of the power supply module (2) is a power receiving device, and a step (i) is performed after the step (h1) is performed;
(h2) when the determination result of the step (h) is negative, utilizing the processor (4) to determine that the object within the power transmission range of the power supply module (2) is a metallic foreign object and disabling the power transmission of the power supply module (2); and
(i) allowing the power supply module (2) to execute the power transmission.

13. The object detection method according to claim 12, wherein the inductive power supply (1, 1a, 1b) further comprises a plurality of said resonant capacitors (30, 30a) and a plurality said driving units (31, 31a), wherein the step (a) of the objective detection method comprises a step of:
(a1) controlling at least one of said driving unit (31, 31a) to output the driving signal to a corresponding said resonant capacitor (30, 30a) so the corresponding resonant capacitor (30, 30a) resonates with the power supply coil (20) for generating resonant signal, and utilizing the timer of the processor (4) to start timing.

14. The object detection method according to claim 13, wherein after the step (f) and the step (h1), the object detection method further comprises a step of:
(j) determining whether a plurality of resonant capacitor (30, 30a) combinations of the plurality of resonant capacitors (30, 30a) have fully resonated with the power supply coil (20) for generating the resonant signal, wherein the step (i) is performed again when the determination result of the step (j) is positive, the step (a1) is performed again when the determination result of the step (j) is negative,
wherein the plurality of resonant capacitor (30, 30a) combinations are formed by selecting from the plurality of resonant capacitors (30, 30a).

15. The object detection method according to claim 14, wherein a resonant frequency is generated when the at least one resonant capacitor (30, 30a) resonates with the power supply coil (20), and the resonant frequency corresponds to the preset time length.

## Amended claims

### Amended claims in accordance with Rule 137(2) EPC.

1. An inductive power supply (1, 1a, 1b), comprising:
a power supply module (2) comprising a power supply coil (20);
a resonant capacitor (30, 30a) electrically connected to a first terminal (201) of the power supply coil (20), wherein there is a node (O) between the first terminal (201) of the power supply coil (20) and the resonant capacitor (30, 30a), and the power supply coil (20) and the resonant capacitor (30, 30a) form a resonant circuit, and a resonant signal is generated when the resonant capacitor (30, 30a) resonates with the power supply coil (20);
a driving unit (31, 31a) electrically connected to the resonant capacitor (30, 30a), wherein the driving unit (31, 31a) is configured to output a driving signal for driving the power supply coil (20); and
a voltage detector (32) electrically connected to the node (O) and configured to receive the resonant signal and to convert the resonant signal into a detection signal;
**characterized by** a processor (4) electrically connected to the voltage detector (32) and the driving unit (31, 31a), wherein the processor (4) is configured to control the driving unit (31, 31a) and to obtain resonant cycles of the resonant signal according to the detection signal when the resonant capacitor (30, 30a) resonates with the power supply coil (20),
wherein, after the driving unit (31, 31a) drives the power supply coil (20), the resonant capacitor (30, 30a) resonates with the power supply coil (20), and a timer of the processor (4) is configured to start timing, wherein, when the resonant cycle exceeds a cycle threshold, the timer is configured to stop timing, the processor (4) is configured to calculate and obtain a measurement of time length according to an interval between the start time and the stop time of the timer, wherein the cycle threshold is an average period of multiple cycles of the detection signal in normal state,
wherein, when the measurement of time length is less than a preset time length, the processor (4) is configured to determine that there is an object within a power transmission range of the power supply module (2).

2. The inductive power supply (1, 1a, 1b) according to claim 1, wherein, when the measurement of time length is greater than the preset time length, the processor (4) is configured to determine that there is no object within the power transmission range of the power supply module (2).

3. The inductive power supply (1, 1a, 1b) according to claim 1, wherein a resonant frequency is generated when the resonant capacitor (30, 30a) resonates with the power supply coil (20), and the preset time length is set based on the value of the resonant frequency.

4. The inductive power supply (1, 1a, 1b) according to claim 3, wherein the processor (4) is configured to record a maximum cycle value and a minimum cycle value of the resonant signal during timing of the timer, and to obtain a variation value according to the maximum cycle value and the minimum cycle value, when the measurement of time length is less than the preset time length and the variation value is greater than a preset variation value, the processor (4) is configured to determine that the object within the power transmission range of the power supply module (2) is a power receiving device configured to receive the power provided by the power supply module (2), when the measurement of time length is less than the preset time length and the variation value is less than the preset variation value, the processor (4) is configured to determine that the object within the power transmission range of the power supply module (2) is a metallic foreign object.

5. The inductive power supply (1, 1a, 1b) according to claim 4, wherein the resonant frequency corresponds to the preset variation value, and a capacitance of the resonant capacitor (30, 30a) is configured to affect the resonant frequency.

6. The inductive power supply (1, 1a, 1b) according to claim 1, further comprising a plurality of said resonant capacitors (30, 30a) and a plurality said driving units (31, 31a), wherein each resonant capacitor (30, 30a) is electrically connected to a corresponding said driving unit (31, 31a), each resonant capacitor (30, 30a) and the corresponding driving unit (31, 31a) are electrically connected between the processor (4) and the first terminal (201) of the power supply coil (20), each resonant capacitor (30, 30a) is electrically connected to the node (O), the processor (4) is configured to control at least one of the driving unit (31, 31a) for outputting the driving signal to the corresponding resonant capacitor (30, 30a), so the corresponding resonant capacitor (30, 30a) resonates with the power supply coil (20) for generating the resonant signal.

7. The inductive power supply (1, 1a, 1b) according to claim 6, wherein a resonant frequency is generated when the corresponding resonant capacitor (30, 30a) resonates with the power supply coil (20), and the preset time length is set based on the value of the resonant frequency.

8. An object detection method of an inductive power supply (1, 1a, 1b), suitable for the inductive power supply (1, 1a, 1b) according to claim 1, **characterized in that** the detection method comprises steps of:
(a) after the driving unit (31, 31a) drives the power supply coil (20), utilizing the resonant capacitor (30, 30a) to resonate with the power supply coil (20) for generating the resonant signal, and controlling the timer of the processor (4) to start timing;
(b) utilizing the voltage detector (32) to receive the resonant signal and converting the resonant signal into the detection signal;
(c) when the resonant cycle exceeds the cycle threshold, controlling the timer to stop timing, and the cycle threshold is an average period of multiple cycles of the detection signal in normal state;
(d) utilizing the processor (4) to calculate and obtain the measurement of time length according to an interval between the start time and the stop time of the timer; and
(e) utilizing the processor (4) to determine that there is the object within the power transmission range of the power supply module (2) when the measurement of time length is less than the preset time length.

9. The object detection method according to claim 8, wherein a resonant frequency is generated when the resonant capacitor (30, 30a) resonates with the power supply coil (20), and the preset time length is set based on the value of the resonant frequency, and a capacitance of the resonant capacitor (30, 30a) affects the resonant frequency.

10. The object detection method according to claim 8, further comprising a step of:
(f) utilizing the processor (4) to determine that there is no object within the power transmission range of the power supply module (2) when the measurement of time length is greater than the preset time length.

11. The object detection method according to claim 10, wherein after the step (e), the object detection method further comprises steps of:
(g) utilizing the processor (4) to record a maximum cycle value and a minimum cycle value of the resonant signal during timing of the timer and to obtain a variation value according to the maximum cycle value and the minimum cycle value; and
(h) determining whether the variation value is greater than a preset variation value.

12. The object detection method according to claim 11, wherein the step (h) further comprises steps of:
(h1) when the determination result of the step (h) is positive, utilizing the processor (4) to determine that the object within the power transmission range of the power supply module (2) is a power receiving device, and a step (i) is performed after the step (h1) is performed;
(h2) when the determination result of the step (h) is negative, utilizing the processor (4) to determine that the object within the power transmission range of the power supply module (2) is a metallic foreign object and disabling the power transmission of the power supply module (2); and
(i) allowing the power supply module (2) to execute the power transmission.

13. The object detection method according to claim 12, wherein the inductive power supply (1, 1a, 1b) further comprises a plurality of said resonant capacitors (30, 30a) and a plurality said driving units (31, 31a), wherein the step (a) of the objective detection method comprises a step of:
(a1) controlling at least one of said driving unit (31, 31a) to output the driving signal to a corresponding said resonant capacitor (30, 30a) so the corresponding resonant capacitor (30, 30a) resonates with the power supply coil (20) for generating resonant signal, and utilizing the timer of the processor (4) to start timing.

14. The object detection method according to claim 13, wherein after the step (f) and the step (h1), the object detection method further comprises a step of:
(4) determining whether a plurality of resonant capacitor (30, 30a) combinations of the plurality of resonant capacitors (30, 30a) have fully resonated with the power supply coil (20) for generating the resonant signal, wherein the step (i) is performed again when the determination result of the step (j) is positive, the step (a1) is performed again when the determination result of the step (j) is negative, wherein the plurality of resonant capacitor (30, 30a) combinations are formed by selecting from the plurality of resonant capacitors (30, 30a).

15. The object detection method according to claim 14, wherein a resonant frequency is generated when the at least one resonant capacitor (30, 30a) resonates with the power supply coil (20), and the preset time length is set based on the value of the resonant frequency.
